# FASCICULE DE BREVET EUROPEEN

(11) **EP 1 084 743 B1**
(45) Date de publication et mention de la délivrance du brevet: **13.11.2002**
(21) Numéro de dépôt: 00401997.2
(22) Date de dépôt: 11.07.2000
(51) Int. Cl.: B01D 53/02, B01J 20/08

(54) **Utilisation d'une alumine activée pour éliminer le CO2 d'un gaz**
Entfernung von Kohlendioxid aus Gasen mittels aktiviertem Aluminiumoxid
Removal of CO2 from gases using activated alumina

(30) Priorité: 13.09.1999 FR 9911425
(43) Date de publication de la demande: 21.03.2001
(73) Titulaire: L'air Liquide, S.A. à Directoire et Conseil de Surveillance pour l'Etude et l'Exploitation des Procédés Georges Claude, 75321 Paris Cedex 07 (FR)
(72) Inventeur: Monereau, Christian, 75011 Paris (FR)
(74) Mandataire: Pittis, Olivier

(56) Documents cités:
- EP-A- 0 111 911
- EP-A- 0 862 937
- EP-A- 0 904 824
- US-A- 5 232 474
- US-A- 5 582 029

## Description

La présente invention concerne l'utilisation d'une alumine activée ayant une surface spécifique ou aire de surface inférieure à 299 m²/g, en tant qu'adsorbant destiné à éliminer les impuretés CO₂ et/ou H₂O présentes dans un flux d'air ou d'un gaz de synthèse, ledit adsorbant étant mis en oeuvre dans un procédé d'adsorption de type PSA, TSA ou analogue.

Avant de pouvoir être utilisés à des fins industrielles, de nombreux gaz doivent être prétraités, en particulier purifiés pour en éliminer tout ou partie des impuretés pouvant y être présentes, en quantité plus ou moins variables.

A ce titre, on peut citer notamment l'air atmosphérique et'les gaz de synthèse. Par exemple, il est connu que l'air atmosphérique contient des impuretés de type dioxyde de carbone (CO₂) et/ou vapeur d'eau (H₂O) devant être éliminées avant toute séparation cryogénique de l'air, c'est-à-dire préalablement à l'introduction de l'air dans les échangeurs thermiques de la boîte froide d'une unité de séparation d'air.

En effet, en l'absence d'un tel prétraitement de l'air, il peut se produire une condensation et une solidification en glace de ces impuretés, lors du refroidissement de l'air à température cryogénique, ce qui peut engendrer des problèmes de colmatage de l'équipement ou unité de séparation cryogénique, notamment les échangeurs thermiques, des colonnes de distillation... et par, là-même, une détérioration de celui-ci.

A titre indicatif, la teneur en CO₂ de l'air atmosphérique est usuellement comprise entre 200 vpm et 600 vpm, typiquement de l'ordre de 350 à 450 vpm.

Pour éviter ces problèmes, il est d'usage de prétraiter l'air devant être séparé par voie cryogénique préalablement à cette séparation cryogénique. Ce prétraitement de l'air est généralement appelé épuration ou purification "en-tête" car réalisé en amont de l'unité de séparation cryogénique.

Ce prétraitement de l'air est effectué, selon le cas, par procédé TSA (Température Swing Adsorption) ou par procédé PSA (Pressure Swing Adsorption).

Classiquement, un cycle de procédé TSA comporte les étapes suivantes :
a) purification de l'air par adsorption des impuretés à pression super atmosphérique, e.g., supérieure à 1 bar,
b) dépressurisation de l'adsorbeur jusqu'à la pression atmosphérique ou en-dessous de la pression atmosphérique, e.g. de l'ordre ou inférieure à 1 bar,
c) régénération complète de l'adsorbant à environ la pression atmosphérique avec un gaz chaud, notamment par les gaz résiduaires ou gaz déchets, typiquement de l'azote impur provenant d'une unité de séparation d'air et réchauffé au moyen d'un ou plusieurs échangeurs thermiques,
d) refroidissement de l'adsorbant, notamment en continuant à y introduire ledit gaz résiduaire issu de l'unité de séparation d'air, mais non réchauffé,
e) repressurisation de l'adsorbeur avec de l'air purifié issu, par exemple, d'un autre adsorbeur se trouvant en phase de production.

De façon analogue, un cycle de procédé PSA comporte, quant à lui, sensiblement les mêmes étapes a), b) et e), mais se distingue d'un procédé TSA par une absence de réchauffement du ou des gaz résiduaires lors de l'étape de régénération (étape c)), donc l'absence de l'étape d) et, en général, un temps de cycle plus court qu'en procédé TSA.

Préférentiellement, les dispositifs de prétraitement de l'air comprennent au moins deux adsorbeurs, fonctionnant en parallèle, c'est-à-dire de manière alternée, l'un des adsorbeurs étant en phase de production, pendant que l'autre est en phase de régénération.

De tels procédés TSA ou PSA de purification d'air sont notamment décrit dans les documents US-A-3,738,084, US-A-5,531,808, US-A-5,587,003 et US-A-4,233,038.

En outre, il est connu que, lorsqu'on utilise des particules d'adsorbant pour pré-purifier de l'air avant de le séparer par distillation cryogénique, il est habituellement effectué un ajustage (refroidissement à l'eau) de la température de l'air comprimé depuis une température habituellement d'au moins 80°C, voire davantage, jusqu'à la température ambiante, puis ensuite de pré-refroidir l'air avant son introduction dans le ou les adsorbeurs ; ceci étant réalisé habituellement par un groupe frigorifique amenant l'air depuis la température ambiante jusqu'à une température inférieure à la température ambiante. Ceci est d'ailleurs clairement expliqué par le document *Industrial Gases & Cryogenics Today, IOMA Broadcaster, Air Purification for cryogenic air separation units, Jan.-Feb. 1984, p. 15 et suivantes* ou par le document EP-A-438282.

En effet, il est recommandé de pré-refroidir l'air avant de le soumettre à une étape de séparation par adsorption car, comme connu de l'homme du métier, plus la température d'adsorption est basse, plus l'efficacité de l'adsorption des impuretés augmente. En d'autres termes, l'efficacité de la prépurification d'air est nettement favorisée pour les températures basses, c'est-à-dire les températures proches de 5°C.

Ensuite, après son passage dans la zone de purification, c'est-à-dire dans le ou les adsorbeurs, l'air débarrassé de toutes ou partie de ses impuretés néfastes, en particulier les impuretés CO₂ et H₂O, est ensuite classiquement refroidi à température cryogénique, c'est-à-dire, en général à une température inférieure à environ -120 °C, avant d'être acheminé vers l'unité de distillation cryogénique et introduit dans une ou plusieurs colonnes de distillation en vue d'y être séparé pour récupérer de l'azote, de l'oxygène et/ou de l'argon.

De façon analogue, les gaz de synthèse ou syngaz contiennent habituellement des impuretés devant être éliminées préalablement à toute séparation cryogénique du mélange d'hydrogène (H2) et de monoxyde carbone (CO) constituant le syngaz. Par exemple, les gaz de synthèse provenant d'une unité de lavage aux amines contiennent classiquement de 1 à 600 vpm, préférentiellement de 10 à 500 vpm, d'impuretés de type CO₂.

De manière générale, il est usuel d'utiliser un adsorbant de type zéolite, par exemple une zéolite X ou A, pour éliminer les impuretés CO₂ et de mettre en oeuvre un adsorbant de type alumine, zéolite ou gel de silice pour adsorber la vapeur d'eau (H₂O) contenues dans un gaz à purifier. Par exemple, on peut se rapporter au document EP-A-718 024 qui décrit un procédé d'élimination du CO₂ contenu dans un flux d'air à température ambiante, au moyen d'un adsorbant de type zéolite X ayant un rapport Si/Al inférieur à 1,15, de préférence de l'ordre de 1. Il est à noter qu'un procédé similaire est divulgué par le document EP-A-284850.

Bien que certains documents rapportent la possibilité d'utiliser de l'alumine pour éliminer le CO₂, l'alumine est plutôt recommandée pour éliminer l'eau car elle présente une bonne résistance mécanique, une capacité d'adsorption et une affinité élevées pour l'eau, elle n'engendre que peu de co-adsorption des autres gaz et est, de plus, aisée à régénérer.

Par contre, l'alumine est réputée être un adsorbant moins efficace pour éliminer le CO₂ et, pour pallier ce manque d'efficacité, il est d'usage de faire suivre le lit d'alumine par un ou plusieurs lits d'un autre adsorbant, telle que la zéolite, ainsi que décrit, par exemple, par les documents US-A-5137,548; US-A-4,541,851 et US-A-5,689,974.

Pour tenter de résoudre ce problème, certains documents suggèrent d'utiliser des alumines modifiées, en particulier des alumines dopées par des cations métalliques, tels les cations sodium et/ou potassium.

Par exemple, le document EP-A-766 991 enseigne un procédé de type PSA (Pressure Swing Adsorption) pour l'adsorption du CO₂ présent dans un gaz, dans lequel le gaz est mis en contact avec des particules d'une alumine imprégnée, laquelle alumine est obtenue par imprégnation avec une solution basique de pH supérieur à 9, puis séchée mais sans être ensuite calcinée. En d'autres termes, les particules d'alumine activée sont mises en forme puis imprégnées avec une solution appropriée et enfin séchées à une température de l'ordre de 120°C. Dans ce cas, le traitement par imprégnation a donc lieu sur des particules d'alumine activée déjà formées.

En alternative, le document US-A-4,433,981 décrit un procédé d'élimination du CO₂ d'un flux gazeux par mise en contact à une température allant jusqu'à 300°C avec des particules d'alumine préparées par imprégnation d'une alumine poreuse avec une solution d'oxyde de potassium ou de sodium, suivi d'un séchage et d'une calcination des particules ainsi obtenues.

Par ailleurs, l'enseignement du document EP-A-862937 est analogue à celui du document EP-A-766991, à l'exception du fait que les particules d'alumine imprégnées obtenues sont utilisées dans un procédé TSA (Température Swing Adsorption).

En outre, le document EP-A-862936 préconise de réaliser un mélange de particules d'alumine et de particules de zéolite pour permettre une élimination simultanée du CO₂ et de l'eau contenus dans un gaz, tel l'air. Préférentiellement, l'alumine utilisée est celle décrite par EP-A-766991 et la zéolite mise en oeuvre est celle donnée par EP-A-718024.

Par ailleurs, les documents EP-A-904823, EP-A-904824 et EP-A-904825 décrivent l'utilisation d'alumine activée ou d'un lit composite d'alumine activée et de zéolite pour éliminer le CO₂ et la vapeur d'eau d'un flux de gaz, tel l'air. L'alumine activée mise en oeuvre est une alumine commercialisée par la Société La Roche sous la référence A-201 AA™ ayant une surface spécifique ("surface area"), encore appelée "aire massique" ou "surface massique", comprise entre 300 et 345 m²/g.

En outre, des alumines activées similaires ayant des surfaces spécifiques comprise entre, d'une part, 300 et 380 m²/g et, d'autre part, 325 et 360 m²/g sont connues et commercialisées par les Sociétés Procatalyse et Alcoa, respectivement, sous les références commerciales Activated Alumina 2 -5 Grade A™ et Activated Alumina F-200™, respectivement.

Le document EP-A-0111911 décrit une élimination du CO₂ dans un flux d'oléfines, c'est-à-dire un flux d'hydrocarbures du type C2-C4, par exemple l'éthylène, le propylène, l'isobutylène, le 1-butène et le 2-butène.

Les documents US-A-5,232,474 et EP-A-862937 enseignent l'élimination du CO₂ dans un flux d'air.

Enfin, le document US-A-5,582,029 propose l'élimination de CO₂ d'un gaz-déchet ou off-gaz contenant notamment du CO et du H₂.

Toutefois, malgré les nombreux procédés de purification existants, aucun de ceux-ci ne peut être considérer comme pleinement satisfaisant au plan industriel, c'est-à-dire qu'il se pose encore le problème de purifier avec encore plus d'efficacité un flux de gaz, en particulier de l'air ou de gaz de synthèse pollué par des impuretés CO₂ et/ou vapeur d'eau, de manière à pouvoir éliminer par adsorption le plus possible de ces impuretés et récupérer ensuite un flux de gaz quasiment pur, c'est-à-dire dont la majeure partie de ces impuretés a été éliminée.

Le but de la présente invention est donc d'améliorer les procédés connus, en proposant un procédé de purification d'air ou de syngaz permettant d'atteindre des performances meilleures que les procédés suscités, en particulier en ce qui concerne l'élimination du CO₂ et de l'eau contenue dans le gaz à purifier, c'est-à-dire que la présente invention vise à proposer un procédé de purification d'air ou de syngaz permettant d'éliminer efficacement au moins le CO₂ et, de préférence à la fois le dioxyde de carbone (CO₂) et la vapeur d'eau présents en tant qu'impuretés dans le gaz à purifier.

La présente invention concerne alors un procédé de purification d'un gaz contenant au moins du dioxyde de carbone (CO₂) en tant qu'impureté ledit gaz étant choisi parmi l'air et les gaz de synthèse contenant de l'hydrogène (H₂) et du monoxyde de carbone (CO), dans lequel on adsorbe au moins une partie du dioxyde de carbone (CO₂) sur au moins un adsorbant, ledit adsorbant comprenant des particules d'au moins une alumine activée, caractérisé en ce que l'alumine activée a une surface spécifique comprise entre 200 m²/g et 299 m²/g, ladite alumine activée contenant :
- au moins 80% d'oxydé d'aluminium (Al₂O₃),
- de l'oxyde de silice (SiO₂),
- de l'oxyde de fer (Fe₂O₃), et
- de 0.1 à 7.25% d'au moins un oxydé d'au moins un métal alcalin ou alcalino-terreux.

Dans le cadre de l'invention, les pourcentages (%) sont des pourcentages en poids mesurés après perte au feu de l'alumine, c'est-à-dire après un chauffage de l'alumine à température élevée, par exemple 1100°C. Classiquement, la perte de poids résultant d'un tel chauffage est de l'ordre de 5% environ et est essentiellement due à une évaporation d'eau.

En effet, les particules d'alumine activée ayant une surface spécifique comprise entre 200 m²/g et 299 m²/g et répondant à composition chimique ci-dessus présentent, comme expliqué ci-après, des propriétés d'adsorption du dioxyde de carbone nettement supérieures à celles ayant une surface spécifique supérieure à 300 m²/g, c'est-à-dire les alumines classiques décrites dans l'état de la technique.

Selon le cas, le procédé de l'invention peut comprendre l'une ou plusieurs des caractéristiques suivantes :
- ladite alumine activée contient (sur la base du poids sec après perte au feu) de 85 % à 99.8 % d'oxyde d'aluminium (Al₂O₃), de préférence de 90 % à 99.5 % d'oxyde d'aluminium, préférentiellement au moins 92 % d'oxyde d'aluminium.
- ladite alumine activée contient de 0.0001 % à 3 % en poids d'oxyde de silice (SiO₂), de préférence moins de 2.5% d'oxyde de silice et/ou plus de 0.001% d'oxyde de silice.
- ladite alumine activée contient moins de 1% d'oxyde de fer (Fe₂C₃), de préférence moins de 0.5% d'oxyde de fer et/ou plus de 0.0005 % d'oxyde de fer.
- ladite alumine activée contient moins de 6% d'oxyde d'au moins un métal alcalin ou alcalino-terreux, de préférence moins de 5% d'au moins un métal alcalin ou alcalino-terreux préférentiellement moins de 4% d'au moins un métal alcalin ou alcalino-terreux et/ou plus de 0.5% d'au moins un métal alcalin ou alcalino-terreux
- l'alumine activée contient au moins un oxyde d'au moins un métal choisi parmi le sodium (Na), le potassium (K) et leurs mélanges, de préférence un oxyde de sodium (Na₂O).
- l'alumine activée a une surface spécifique comprise entre 225 m²/g et 290 m²/g, de préférence comprise entre 250 m²/g et 285 m²/g.
- l'alumine activée a un volume macroporeux compris entre 0.01 et 0.50 cc/g, de préférence compris entre 0.03 et 0.30 cc/g, préférentiellement compris entre 0.04 et 0.17 cc/g.
- l'alumine activée a une densité comprise entre 760 kg/m³ et 890 kg/m³, de préférence entre 769 kg/m³ et 865 kg/m³, et/ou une résistance à l'écrasement comprise entre 6 kg et 17 kg, de préférence entre 6.6 kg et 15.2kg.
- l'alumine activée est sous forme de particules agglomérées ayant une taille comprise entre 1 mm et 5 mm, de préférence de 1,5 mm à 3,5 mm ; les particules pouvant être des sphères, des bâtonnets, des ellipses ou tout autre forme adéquate.
- il est choisi dans le groupe formé par les procédés TSA et PSA, de préférence TSA.
- opère à une pression d'adsorption de 1 à 100 bars, de préférence de 4 bars à 50 bars et/ou à une pression de désorption de 0.1 à 10 bars, de préférence de 1 à 6 bars.
- il comprend au moins une étape de régénération de l'adsorbant, de préférence par balayage avec un gaz inerte à une température d'au moins 50°C, par exemple par régénération avec de l'azote issu d'une unité de séparation d'air (ASU).
- le flux gazeux à purifier est de préférence de l'air.
- il comprend au moins une étape d'élimination par adsorption d'au moins une impureté choisie dans le groupe formé par la vapeur d'eau (H₂O), les oxydes d'azote (NₓO_{y}), les composés chlorés (CₙHₘClₚ), tel CH₃Cl, et les hydrocarbures (CₙHₘ), de préférence une élimination de vapeur d'eau.
- le flux de gaz à purifier contient de 1 vpm à 1000 vpm de CO₂, de préférence de 100 vpm à 600 vpm de CO₂.
- ledit au moins un composé métallique alcalin ou alcalino-terreux est incorporé auxdites particules avant activation desdites particules par chauffage et éventuellement calcination.
- l'incorporation dudit au moins un composé métallique alcalin ou alcalino-terreux est réalisée par mise en contact d'alumine sous forme de poudre avec une solution contenant au moins un oxyde ou hydroxyde dudit au moins un composé métallique, et formation de particules agglomérées d'alumine à partir du mélange de poudre et de solution ainsi obtenu. Dans ce cas, l'alumine activée est dopée par des cations métalliques de type Na et/ou K incorporés directement durant le processus de fabrication de l'alumine, c'est-à-dire pendant la ou les étapes de mise en forme des particules, présentent des propriétés tout-à-fait remarquables et inattendues lorsqu'elles sont utilisées pour éliminer les impuretés de type CO₂ et/ou H₂O contenues dans de l'air atmosphérique ou un gaz de synthèse. Un procédé de fabrication d'alumines dont on peut s'inspirer pour synthétiser de telles alumines, moyennant quelques adaptations à la portée de l'homme du métier, est décrit dans le document US-A-5,856,265. En effet, ce document enseigne un procédé de fabrication de particules d'alumine activée contenant des composés métalliques alcalins ou alcalino-terreux, tels les hydroxydes de sodium (NaOH)ou potassium (KOH), dans lequel une poudre d'alumine activée est d'abord mise en forme de d'agglomérats d'alumine activé, puis ces agglomérats sont ensuite traités avec une solution aqueuse de pH compris entre 12,7 et 14, à une température allant de la température ambiante à 95°C (200°F), ladite solution contenant le ou les composés métalliques suscités, et on procède alors à un chauffage, de préférence un chauffage conduisant à une déshydratation rapide, à une température comprise entre 400°C et 1000°C des agglomérats traités par la solution aqueuse, de manière à obtenir les particules d'alumine activée désirées incluant lesdits cations métalliques. Un tel procédé de chauffage rapide est décrit par le document US-A-2,915,365.
- ledit au moins un composé métallique alcalin ou alcalino-terreux est incorporé, de façon alternative, auxdites particules après activation desdites particules par chauffage et avant une éventuelle calcination, par exemple par imprégnation des particules avec une solution basique renfermant les cations métalliques à incorporer à l'alumine.
- la solution a un pH compris entre 12 et 14, de préférence le pH est compris entre 12,5 et 13,8.
- le séchage de l'alumine est réalisé à une température inférieure à 200°C, de préférence de 50°C à 150°C.
- la calcination de l'alumine est effectuée à une température comprise entre 200°C et 600°C, de préférence entre 300°C et 500°C.

Selon un autre aspect, l'invention porte aussi sur un procédé de production d'azote, d'argon et/ou d'oxygène à partir d'un flux d'air contenant au moins du dioxyde de carbone (CO₂) en tant qu'impureté, dans lequel :
(a) le flux d'air est soumis à une purification avec élimination par adsorption d'au moins une partie du dioxyde de carbone (CO₂) au moyen d'un adsorbant contenant une alumine activée et par mise en oeuvre d'un procédé de purification selon l'invention, tel que décrit ci-dessus, de manière à obtenir un flux d'air purifié débarrassé d'au moins une partie des impuretés dioxyde de carbone (CO₂),
(b) le flux d'air purifié ayant subi l'étape (a) est subséquemment refroidi et soumis à au moins une étape de séparation cryogénique avec production d'azote, d'argon et/ou d'oxygène.

Selon encore un autre aspect, l'invention concerne également un procédé de production d'hydrogène (H₂) et/ou de monoxyde de carbone (CO) à partir d'un flux d'un gaz de synthèse contenant de l'hydrogène (H₂) et du monoxyde de carbone (CO) et contenant, en outre, au moins du dioxyde de carbone (CO₂) en tant qu'impureté, dans lequel :
(a) le flux de gaz de synthèse est soumis à une purification avec élimination par adsorption d'au moins une partie du dioxyde de carbone (CO₂) au moyen d'un adsorbant contenant une alumine activée et par mise en oeuvre d'un procédé de purification selon l'invention, tel que décrit ci-dessus, de manière à obtenir un gaz de synthèse purifié débarrassé d'au moins une partie des impuretés dioxyde de carbone (CO₂).
(b) le gaz de synthèse purifié ayant subi l'étape (a) est subséquemment refroidi et soumis à au moins une étape de séparation cryogénique avec production d'hydrogène (H₂) et/ou de monoxyde de carbone (CO).

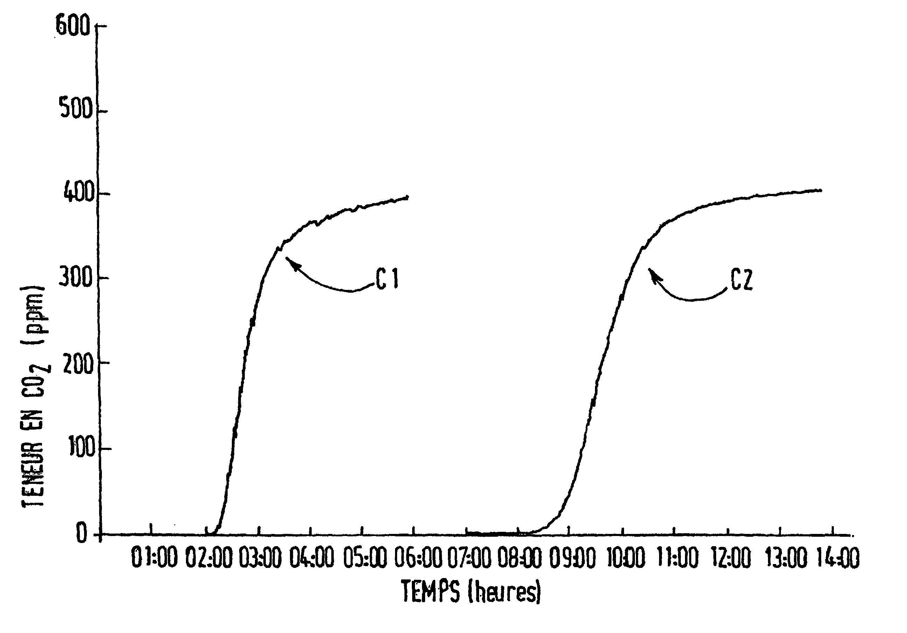

La présente invention va être maintenant illustrée à l'aide d'un exemple comparatif, donné à titre illustratif mais non limitatif, en références à la figure annexée.

### Exemple

Afin de montrer l'efficacité d'une alumine utilisée selon l'invention dans l'élimination du CO₂ contenu dans un flux d'air atmosphérique, deux courbes de percée ont été réalisées.

La première courbe (C1, comparative) de percée a été réalisée en utilisant une alumine classique couramment accessible dans le commerce, par exemple l'alumine commercialisée par la Société Procatalyse sous la référence 2 - 5 Grade A™, laquelle se présente sous forme de billes de 2 mm de diamètre et dont les caractéristiques sont les suivantes :
- aire spécifique (BET) : 340 m²/g
- densité : 800 kg/m³
- résistance à l'écrasement : 16 daN
- macroporosité (>700 A) : 0.11 cc/g

La seconde courbe (C2) de percée a été obtenue avec une alumine conforme à l'invention, par exemple une alumine activée dopée de référence A-204-4™ disponible auprès de la Société LAROCHE INDUSTRIES, laquelle se présente sous forme de particules de 7 X 12 mesh (2.8 mm x 1.4 mm) ou de 5 X 8 mesh (4 mm x 2.4 mm) dont les caractéristiques sont les suivantes :
- aire spécifique : 270 m²/g
- densité : 817 kg/m³
- résistance à l'écrasement : 10.8 kg
- macroporosité (>700 A) : 0.11 cc/g

La composition chimique de cette alumine activée A 204-4 conforme à l'invention est la suivante :
- oxyde de silice : env. 0.02 % en poids
- oxyde de fer : env. 0.02 % en poids
- oxyde d'aluminium et oxydes métalliques : env. 93.9 % en poids
- perte au feu : env. 6% en poids

Il est à souligner que des résultats comparables ont été obtenus avec l'alumine activée de référence A-206™ également disponible auprès de la Société LAROCHE INDUSTRIES, laquelle convient aussi dans le cadre de la présente invention.

Les caractéristiques de cette alumine activée A-206 conforme à l'invention sont les suivantes :
- aire spécifique : 280 m²/g
- densité : 800 kg/m³
- résistance à l'écrasement : 5.4 kg
- macroporosité (>700 A) : 0.10 cc/g

La composition chimique de cette alumine activée A 206 est la suivante
- oxyde de silice : env. 0.02 % en poids
- oxyde de fer : env. 0.02 % en poids
- oxyde d'aluminium et oxydes métalliques : env. 94 % en poids
- perte au feu : env. 6% en poids

Dans les deux cas, le gaz à purifier contient environ 450 ppm de dioxyde de carbone (avant purification).

Le procédé mis en oeuvre est de type TSA et les conditions opératoires sont les suivantes :
- pression d'adsorption : 6.10⁵ Pa (6 bars absolus)
- température du gaz : 25°C
- débit du gaz : 1,2 Nm^{3/}h

Les courbes de percée C1 et C2 ainsi obtenues sont représentées sur la figure annexée et font clairement apparaître que le procédé selon l'invention (courbe C2) conduit à des résultats nettement meilleurs que celui mis en oeuvre avec une alumine selon l'art antérieur (courbe C1).

En effet, un procédé mis en oeuvre avec une alumine classique conduit à une percée du CO₂ après environ 2 à 3 heures, c'est-à-dire qu'après 2 à 3 heures de fonctionnement, le lit d'alumine classique doit subir une régénération pour en éliminer le CO₂ adsorbé.

A l'inverse, on constate qu'en utilisant une alumine activée dopée telle que préconisée par la présente invention (courbe C2), on augmente considérablement la durée de la phase d'adsorption puisque, dans ce cas, la percée du CO₂ n'a lieu qu'après environ 7 à 8 heures, c'est-à-dire que la phase de production est triplée et donc le nombre de régénérations est divisé par un facteur 3 ou que le volume d'alumine à utiliser est plus faible.

Le procédé selon l'invention est donc nettement plus efficace que les procédés connus et engendre des économies considérables, en termes de consommation énergétique, étant donné que la fréquence et donc le nombre de régénération est divisé par un facteur 3 ou que le volume d'alumine à utiliser est plus faible par rapport à un procédé classique.

Par ailleurs, lorsque l'on considère la capacité d'adsorption en CO₂ de l'alumine mis en oeuvre selon l'invention ou, à titre comparatif, selon l'art antérieur, on constate que le procédé selon l'invention conduit à une capacité d'adsorption de 3.5 à 4 fois supérieure à celle obtenue avec un procédé classique, à cinétique équivalente.

De façon inattendue et non prévisible, les particules d'alumine activée ayant une surface spécifique comprise entre 200 m²/g et 299 m²/g et ayant la composition chimique selon la présente invention, présentent des propriétés d'adsorption du dioxyde de carbone nettement supérieures à celles obtenues avec des particules d'alumine activée ayant une surface spécifique supérieure à 300 m²/g, c'est-à-dire les alumines utilisées dans les procédés classiques .

Cela implique, en outre, que la mise en oeuvre d'un procédé de purification de gaz, conformément à la présente invention, conduit à utiliser une quantité moindre d'alumine activée par rapport à un procédé classique pour obtenir un résultat équivalent en termes d'efficacité de séparation et engendre donc, en outre, une diminution notamment des coûts de production.

## Revendications

1. Procédé de purification d'un gaz contenant au moins du dioxyde de carbone (CO₂) en tant qu'impureté, ledit gaz étant choisi parmi l'air ou les gaz de synthèse contenant de l'hydrogène (H₂) et du monoxyde de carbone (CO); dans lequel on adsorbe au moins une partie du dioxyde de carbone (CO₂) sur au moins un adsorbant, ledit adsorbant comprenant des particules d'au moins une alumine activée, ladite alumine activée contenant:
- au moins 80% d'oxyde d'aluminium (Al₂O₃),
- de l'oxyde de silice (SiO₂),
- de l'oxyde de fer (Fe₂O₃), et
- de 0.1% - de à 7.25% d'au moins un oxyde d'au moins un métal alcalin ou alcalino-terreux,
**caractérisé en ce que** ladite alumine activée à une surface spécifique comprise entre 200 m²/g et 299 m²/g.

2. Procédé selon la revendication 1, **caractérisé en ce que** ladite alumine activée contient de 85 % à 99.8 % d'oxyde d'aluminium (Al₂O₃), de préférence de 90 % à 99.5 % d'oxyde d'aluminium, préférentiellement au moins 92 % d'oxyde d'aluminium.

3. Procédé selon l'une des revendications 1 ou 2, **caractérisé en ce que** ladite alumine activée contient de 0.0001 % à 3 % en poids d'oxyde de silice (SiO₂), de préférence moins de 2.5% d'oxyde de silice et/ou plus de 0.001% d'oxyde de silice.

4. Procédé selon l'une des revendications 1 à 3, **caractérisé en ce que** ladite alumine activée contient moins de 1% d'oxyde de fer (Fe₂O₃), de préférence moins de 0.5% d'oxyde de fer et/ou plus de 0.0005 % d'oxyde de fer.

5. Procédé selon l'une des revendications 1 à 4, **caractérisé en ce que** ladite alumine activée contient moins de 6% d'oxyde d'au moins un métal alcalin ou alcalino-terreux, de préférence moins de 5% d'au moins un métal alcalin ou alcalino-terreux.

6. Procédé selon l'une des revendications 1 à 5, **caractérisé en ce que** l'alumine activée contient au moins un oxyde d'au moins un métal choisi parmi le sodium (Na), le potassium (K) et leurs mélanges, de préférence un oxyde de sodium (Na₂O).

7. Procédé selon l'une des revendications 1 à 6, **caractérisé en ce que** l'alumine activée a une surface spécifique comprise entre 225 m²/g et 290 m²/g, de préférence comprise entre 250 m²/g et 285 m²/g.

8. Procédé selon l'une des revendications 1 à 7, **caractérisé en ce que** l'alumine activée a un volume macroporeux compris entre 0.01 et 0.50 cc/g, de préférence compris entre 0.03 et 0.30 cc/g, préférentiellement compris entre 0.04 et 0.17 cc/g.

9. Procédé selon l'une des revendications 1 à 8, **caractérisé en ce que** l'alumine activée a une densité comprise entre 760 et 890 kg/m³ et/ou une résistance à l'écrasement comprise entre 6 et 17 kg.

10. Procédé selon l'une des revendications 1 à 9, **caractérisé en ce que** l'alumine activée est sous forme de particules agglomérées ayant une taille comprise entre 1 mm et 5 mm, de préférence de 1,5 mm à 3,5 mm.

11. Procédé selon l'une des revendications 1 à 10, **caractérisé en ce qu'**il est choisi dans le groupe formé par les procédés TSA et PSA, de préférence TSA.

12. Procédé selon l'une des revendications 1 à 11, **caractérisé en ce qu'**on opère à une pression d'adsorption de 1 à 100 bars, de préférence de 4 bars à 50 bars et/ou à une pression de désorption de 0.1 à 10 bars, de préférence de 1 à 6 bars.

13. Procédé selon l'une des revendications 1 à 12, **caractérisé en ce que** le flux gazeux à purifier est de l'air.

14. Procédé selon l'une des revendications 1 à 13, **caractérisé en ce qu'**il comprend au moins une étape d'élimination par adsorption d'au moins une impureté choisie dans le groupe formé par la vapeur d'eau (H₂O), les oxydes d'azote (NₓO_{y}), les composés chlorés (CₙHₘClₚ) et les hydrocarbures (CₙHₘ).

15. Procédé selon l'une des revendications 1 à 14, **caractérisé en ce que** le flux de gaz à purifier contient de 1 vpm à 1000 vpm de CO₂, de préférence de 100 vpm à 600 vpm de CO₂.

16. Procédé de production d'azote, d'argon et/ou d'oxygène à partir d'un flux d'air contenant au moins du dioxyde de carbone (CO₂) en tant qu'impureté, dans lequel :
(a) le flux d'air est soumis à une purification avec élimination par adsorption d'au moins une partie du dioxyde de carbone (CO₂) au moyen d'un adsorbant contenant une alumine activée et par mise en oeuvre d'un procédé de purification selon l'une des revendications 1 à 15, de manière à obtenir un flux d'air purifié débarrassé d'au moins une partie des impuretés dioxyde de carbone (CO₂),
(b) le flux d'air purifié ayant subi l'étape (a) est subséquemment refroidi et soumis à au moins une étape de séparation cryogénique avec production d'azote, d'argon et/ou d'oxygène.

17. Procédé de production d'hydrogène (H₂) et/ou de monoxyde de carbone (CO) à partir d'un flux d'un gaz de synthèse contenant de l'hydrogène (H₂) et du monoxyde de carbone (CO) et contenant, en outre, au moins du dioxyde de carbone (CO₂) en tant qu'impureté, dans lequel :
(a) le flux de gaz de synthèse est soumis à une purification avec élimination par adsorption d'au moins une partie du dioxyde de carbone (CO₂) au moyen d'un adsorbant contenant une alumine activée et par mise en oeuvre d'un procédé de purification selon l'une des revendications 1 à 15, de manière à obtenir un gaz de synthèse purifié débarrassé d'au moins une partie des impuretés dioxyde de carbone (CO₂),
(b) le gaz de synthèse purifié ayant subi l'étape (a) est subséquemment refroidi et soumis à au moins une étape de séparation cryogénique avec production d'hydrogène (H₂) et/ou de monoxyde de carbone (CO).

## Patentansprüche

1. Verfahren zur Reinigung eines mindestens Kohlendioxid (CO₂) als Verunreinigung enthaltenden Gases, das unter Luft oder Wasserstoff (H₂) und Kohlenmonoxid (CO) enthaltenden Synthesegasen ausgewählt wird, bei dem man zumindest einen Teil des Kohlendioxids (CO₂) an mindestens einem Adsorptionsmittel adsorbiert, welches Teilchen aus mindestens einem aktivierten Aluminiumoxid enthält, wobei das aktivierte Aluminiumoxid:
- mindestens 80% Aluminiumoxid (Al₂O₃),
- Siliciumoxid (SiO₂),
- Eisenoxid (Fe₂O₃) und
- 0,1 bis 7,25% mindestens eines Oxids mindestens eines Alkali- oder Erdalkalimetalls
enthält, **dadurch gekennzeichnet, daß** das aktivierte Aluminiumoxid eine spezifische Oberfläche zwischen 200 m²/g und 299 m²/g aufweist.

2. Verfahren nach Anspruch 1, **dadurch gekennzeichnet, daß** das aktivierte Aluminiumoxid 85 bis 99,8% Aluminiumoxid (Al₂O₃), vorzugsweise 90 bis 99,5% Aluminiumoxid, bevorzugt mindestens 92% Aluminiumoxid, enthält.

3. Verfahren nach Anspruch 1 oder 2, **dadurch gekennzeichnet, daß** das aktivierte Aluminiumoxid 0,0001 bis 3 Gew.-% Siliciumoxid (SiO₂), vorzugsweise weniger als 2,5% Siliciumdioxid und/oder mehr als 0,001% Siliciumoxid, enthält.

4. Verfahren nach einem der Ansprüche 1 bis 3, **dadurch gekennzeichnet, daß** das aktivierte Aluminiumoxid weniger als 1% Eisenoxid (Fe₂O₃), vorzugsweise weniger als 0,5% Eisenoxid und/oder mehr als 0,0005% Eisenoxid, enthält.

5. Verfahren nach einem der Ansprüche 1 bis 4, **dadurch gekennzeichnet, daß** das aktivierte Aluminiumoxid weniger als 6% Oxid mindestens eines Alkali- oder Erdalkalimetalls, vorzugsweise weniger als 5% Oxid mindestens eines Alkali- oder Erdalkalimetalls, enthält.

6. Verfahren nach einem der Ansprüche 1 bis 5, **dadurch gekennzeichnet, daß** das aktivierte Aluminiumoxid mindestens ein Oxid mindestens eines unter Natrium (Na), Kalium (K) und Gemischen davon ausgewählten Metalls, vorzugsweise ein Natriumoxid (Na₂O), enthält.

7. Verfahren nach einem der Ansprüche 1 bis 6, **dadurch gekennzeichnet, daß** das aktivierte Aluminiumoxid eine spezifische Oberfläche zwischen 225 m²/g und 290 m²/g, vorzugsweise zwischen 250 m²/g und 285 m²/g, aufweist.

8. Verfahren nach einem der Ansprüche 1 bis 7, **dadurch gekennzeichnet, daß** das aktivierte Aluminiumoxid ein Makroporenvolumen zwischen 0,01 und 0,50 cm³/g, vorzugsweise zwischen 0,03 und 0,30 cm³/g, bevorzugt zwischen 0,04 und 0,17 cm³/g, aufweist.

9. Verfahren nach einem der Ansprüche 1 bis 8, **dadurch gekennzeichnet, daß** das aktivierte Aluminiumoxid eine Dichte zwischen 760 und 890 kg/m³ und/oder eine Druckfestigkeit zwischen 6 und 17 kg aufweist.

10. Verfahren nach einem der Ansprüche 1 bis 9, **dadurch gekennzeichnet, daß** das aktivierte Aluminiumoxid in Form von agglomerierten Teilchen mit einer Größe zwischen 1 mm und 5 mm, vorzugsweise von 1,5 mm bis 3,5 mm, vorliegt.

11. Verfahren nach einem der Ansprüche 1 bis 10, **dadurch gekennzeichnet, daß** man es aus der Gruppe bestehend aus TSA- und PSA-Verfahren, vorzugsweise TSA-Verfahren, auswählt.

12. Verfahren nach einem der Ansprüche 1 bis 11, **dadurch gekennzeichnet, daß** man bei einem Adsorptionsdruck von 1 bis 100 bar, vorzugsweise 4 bar bis 50 bar, und/oder einem Desorptionsdruck von 0,1 bis 10 bar, vorzugsweise 1 bis 6 bar, arbeitet.

13. Verfahren nach einem der Ansprüche 1 bis 12, **dadurch gekennzeichnet, daß** es sich bei dem zu reinigenden Gasstrom um Luft handelt.

14. Verfahren nach einem der Ansprüche 1 bis 13, **dadurch gekennzeichnet, daß** man in mindestens einem Schritt mindestens eine Verunreinigung aus der Gruppe bestehend aus Wasserdampf (H₂O), Stickoxiden (NₓO_{y}), Chlorverbindungen (CₙHₘClₚ) und Kohlenwasserstoffen (CₙHₘ) adsorptiv abtrennt.

15. Verfahren nach einem der Ansprüche 1 bis 14, **dadurch gekennzeichnet, daß** der zu reinigende Gasstrom 1 Vol.-ppm bis 1000 Vol.-ppm CO₂, vorzugsweise 100 Vol.-ppm bis 600 Vol.-ppm CO₂, enthält.

16. Verfahren zur Produktion von Stickstoff, Argon und/oder Sauerstoff aus einem mindestens Kohlendioxid (CO₂) als Verunreinigung enthaltenden Luftstrom, bei dem man:
(a) den Luftstrom einer Reinigung mit adsorptiver Abtrennung mindestens eines Teils des Kohlendioxids (CO₂) mit einem ein aktiviertes Aluminiumoxid enthaltenden Adsorptionsmittel und durch Durchführung eines Reinigungsverfahrens nach einem der Ansprüche 1 bis 15 unterwirft, bei der man einen Strom gereinigter Luft erhält, der von mindestens einem Teil der Kohlendioxid-Verunreinigungen (CO₂) befreit ist,
(b) den dem Schritt (a) unterworfenen Strom gereinigter Luft danach abkühlt und mindestens einem Tieftemperaturzerlegungsschritt unter Produktion von Stickstoff, Argon und/oder Sauerstoff unterwirft.

17. Verfahren zur Herstellung von Wasserstoff (H₂) und/oder Kohlenmonoxid (CO) aus einem Synthesegasstrom, der Wasserstoff (H₂) und Kohlenmonoxid (CO) und außerdem mindestens Kohlendioxid (CO₂) als Verunreinigung enthält, bei dem man:
(a) den Synthesegasstrom einer Reinigung mit adsorptiver Abtrennung mindestens eines Teils des Kohlendioxids (CO₂) mit einem ein aktiviertes Aluminiumoxid enthaltenden Adsorptionsmittel und durch Durchführung eines Reinigungsverfahrens nach einem der Ansprüche 1 bis 15 unterwirft, bei der man ein gereinigtes Synthesegas erhält, das von mindestens einem Teil der Kohlendioxid-Verunreinigungen (CO₂) befreit ist,
(b) das dem Schritt (a) unterworfene gereinigte Synthesegas danach abkühlt und mindestens einem Tieftemperaturzerlegungsschritt unter Produktion von Wasserstoff (H₂) und/oder Kohlenmonoxid (CO) unterwirft.

## Claims

1. Process for purifying a gas containing at least carbon dioxide (CO₂) as impurity, the said gas being chosen from air or synthesis gases containing hydrogen (H₂) and carbon monoxide (CO), in which at least some of the carbon dioxide (CO₂) is adsorbed on at least one adsorbent, the said adsorbent comprising particles of at least one activated alumina, the said activated alumina containing:
- at least 80% aluminium oxide (Al₂O₃),
- silicon oxide (SiO₂),
- iron oxide (Fe₂O₃), and
- from 0.1% to 7.25% of at least one oxide of at least one alkali or alkaline-earth metal,
**characterized in that** the said activated alumina has a specific surface area of between 200 m²/g and 299 m²/g.

2. Process according to Claim 1, **characterized in that** the said activated alumina contains from 85% to 99.8% aluminium oxide (Al₂O₃), preferably from 90% to 99.5% aluminium oxide and preferentially at least 92% aluminium oxide.

3. Process according to either of Claims 1 and 2, **characterized in that** the said activated alumina contains from 0.0001% to 3% by weight of silicon oxide (SiO₂), preferably less than 2.5% silicon oxide and/or more than 0.001% silicon oxide.

4. Process according to one of Claims 1 to 3, **characterized in that** the said activated alumina contains less than 1% iron oxide (Fe₂O₃), preferably less than 0.5% iron oxide and/or more than 0.0005% iron oxide.

5. Process according to one of Claims 1 to 4, **characterized in that** the said activated alumina contains less than 6% oxide of at least one alkali or alkaline-earth metal, preferably less than 5% oxide of at least one alkali or alkaline-earth metal.

6. Process according to one of Claims 1 to 5, **characterized in that** the activated alumina contains at least one oxide of at least one metal chosen from sodium (Na), potassium (K) and mixtures thereof, preferably a sodium oxide (Na₂O).

7. Process according to one of Claims 1 to 6, **characterized in that** the activated alumina has a specific surface area of between 225 m²/g and 290 m²/g, preferably between 250 m²/g and 285 m²/g.

8. Process according to one of Claims 1 to 7, **characterized in that** the activated alumina has a macropore volume of between 0.01 and 0.50 cc/g, preferably between 0.03 and 0.30 cc/g and preferentially between 0.04 and 0.17 cc/g.

9. Process according to one of Claims 1 to 8, **characterized in that** the activated alumina has a density of between 760 kg/m³ and 890 kg/m³ and/or a crush resistance of between 6 kg and 17 kg.

10. Process according to one of Claims 1 to 9, **characterized in that** the activated alumina is in the form of agglomerated particles having a size of between 1 mm and 5 mm, preferably from 1.5 mm to 3.5 mm.

11. Process according to one of Claims 1 to 10, **characterized in that** it is chosen from the group formed by the TSA and PSA processes, preferably the TSA process.

12. Process according to one of Claims 1 to 11, **characterized in that** it is carried out at an adsorption pressure of 1 to 100 bar, preferably 4 bar to 50 bar, and/or at a desorption pressure of 0.1 to 10 bar, preferably 1 to 6 bar.

13. Process according to one of Claims 1 to 12, **characterized in that** the gas stream to be purified is air.

14. Process according to one of Claims 1 to 13, **characterized in that** it comprises at least one step of removing, by adsorption, at least one impurity chosen from the group formed by water vapour (H₂O), nitrogen oxides (NₓO_{y}), chlorinated compounds (CₙHₘClₚ) and hydrocarbons (CₙHₘ).

15. Process according to one of Claims 1 to 14, **characterized in that** the stream of gas to be purified contains from 1 vpm to 1000 vpm of CO₂, preferably from 100 vpm to 600 vpm of CO₂.

16. Process for producing nitrogen, argon and/or oxygen from a stream of air containing at least carbon dioxide (CO₂) as impurity, in which:
(a) the stream of air undergoes a purification step with removal, by adsorption, of at least some of the carbon dioxide (CO₂) by means of an adsorbent containing an activated alumina and by implementing a purification process according to one of Claims 1 to 15, so as to obtain a stream of purified air stripped of at least some of the carbon dioxide impurities (CO₂),
(b) the stream of purified air having undergone step (a) is subsequently cooled and undergoes at least one cryogenic separation step with the production of nitrogen, argon and/or oxygen.

17. Process for producing hydrogen (H₂) and/or carbon monoxide (CO) from a stream of a synthesis gas containing hydrogen (H₂) and carbon monoxide (CO) and furthermore containing at least carbon dioxide (CO₂) as impurity, in which:
(a) the stream of synthesis gas undergoes a purification step with removal, by adsorption, of at least some of the carbon dioxide (CO₂) by means of an adsorbent containing an activated alumina and by implementing a purification process according to one of Claims 1 to 15, so as to obtain a purified synthesis gas stripped of at least some of the carbon dioxide impurities (CO₂),
(b) the purified synthesis gas having undergone step (a) is subsequently cooled and undergoes at least one cryogenic separation step with the production of hydrogen (H₂) and/or carbon monoxide (CO).
